# EUROPEAN PATENT SPECIFICATION

(11) **EP 2 798 233 B1**
(45) Date of publication and mention of the grant of the patent: **15.05.2019**
(21) Application number: 12846816.2
(22) Date of filing: 26.12.2012
(51) Int. Cl.: F16D 28/00, F16D 23/12

(54) **CLUTCH ACTUATOR FOR AN INTERNAL COMBUSTION ENGINE**
KUPPLUNGSAKTUATOR FÜR EINEN VERBRENNUNGSMOTOR
ACTIONNEUR D'EMBRAYAGE D'UN MOTEUR À COMBUSTION INTERNE

(30) Priority: 27.12.2011 IN 4590CH2011
(43) Date of publication of application: 05.11.2014
(73) Proprietor: TVS Motor Company Limited, Chennai 600 006 (IN)
(72) Inventor: RAO, Kandregula Srinivasa, Chennai 600006 (IN); BABU, Yalamuru Ramachandra, Chennai 600006 (IN); NAGARAJA, Krishnabhatta, Chennai 600006 (IN)
(74) Representative: Patentanwaltskanzlei Matschnig & Forsthuber OG
(86) International application number: PCT/IN2012/000852
(87) International publication number: WO 2013/111154

(56) References cited:
- US-A- 4 950 214
- US-A1- 2010 004 837
- US-A1- 2011 039 652

## Description

### FIELD OF THE INVENTION

The present invention relates to a transmission system for an engine and more particularly to an automatic clutch actuation mechanism for automatic disengagement and controlled re-engagement of a multi plate clutch assembly in a four stroke single cylinder internal combustion engine.

### BACKGROUND OF THE INVENTION

A conventional two wheeled vehicle is powered by an internal combustion engine (hereinafter "engine") generally disposed at a lower half of the vehicle. This engine converts chemical energy into mechanical energy by combustion of air-fuel mixture within a combustion chamber of the engine. The engine, among other components, has a cylinder block comprising a cylinder head atop the cylinder block and receiving a reciprocating piston from the bottom. On combustion of the air-fuel mixture, the piston transfers the energy generated during combustion to a crankshaft through a connecting rod thereby driving the crankshaft. In this way, the reciprocatory motion of the piston is converted to rotatory motion of the crankshaft. The crankshaft is housed inside a crankcase beneath the cylinder block.

In order to set the vehicle into motion, the power supplied to the crankshaft of the internal combustion engine is carried to a wheel of the vehicle, in a controllable way, through a transmission system. The transmission system for the engine of a two wheeled vehicle such as a motorcycle generally comprises of a clutch, a gearbox containing gear train and a drive mechanism connecting the gear box to the wheel. In default condition, the clutch is engaged to the engine crankshaft. The gear box comprises a system of interlocking gears having multiple gear ratios with the ability to switch between them as the speed of the vehicle varies. An operator of the vehicle can choose one of the several gear ratios. To allow smooth and gradual shifting of gears from lower to higher or vice versa, the clutch isolates the engine from the gear box momentarily before a gear shift operation. When the operator manually releases a clutch lever, the discs in the clutch assembly are squeezed with each other putting the clutch into operation and thus the transmission is engaged again with the engine.

This manual clutch operation requires continuous attention by the operator on the speed of the motorcycle and engine r.p.m. Further, in heavy traffic it becomes cumbersome for the operator to operate the clutch lever at short time intervals for repeated gear shifts to get the required torque for pulling the motorcycle in traffic. Manual clutch operation thus leads to operator uneasiness and pain in the operator's palm thus jeopardising the stability of the motorcycle. Moreover continuous use of clutch leads to early wear and tear of the clutch thus increasing the vehicle ownership cost.

Furthermore, various semi-automatic and automatic transmission systems exist in the art for ease of operation of clutch actuation. However in an automatic transmission system, major system modifications are required for achieving automatic clutch actuation, most notably crankcase alterations. For same engine design and capacity, a totally new engine crankcase construction is required. This in effect increases variation and complicates overall design standardisation of concerned components to accommodate the electric source. Hence there is also a need for design alteration that can accommodate both manual and automatic clutch actuation system in an engine without any major variation in engine assembly configuration in terms of size and weight and without jeopardising the functionality of the engine.

Therefore the challenge is to provide an arrangement for an automatic transmission system for an internal combustion engine accommodating an electrically operated clutch actuator with minimum engine assembly design alterations and capable to be accommodated with any two wheeled vehicle including a motorcycle or a scooter type motorcycle and irrespective of the engine type, horizontal or vertical. The present invention is directed to overcoming one or more problems as set forth above.

US 2010/0004837 A1 discloses an electrically operated clutch actuator for actuating the operation of engagement and disengagement of a clutch, according to the preamble of claim 1.

### SUMMARY OF THE INVENTION

It is hence an objective of the present invention to provide an arrangement for an automatic transmission system that accommodates a clutch actuating system with appropriate embodiments for automatic disengagement and controlled re-engagement of a multi plate clutch assembly with minimum engine assembly design alterations. To this end, an embodiment of the present invention discloses an electrically operated clutch actuator system for an internal combustion engine for actuating the operation of engagement and disengagement of a clutch comprising of a clutch actuation motor mounted to an external surface of a clutch cover and sealed against ingress of oil, a reduction gear box connected to the said actuation motor for reducing the power received from the said clutch actuation motor, a power transmission mechanism with worm wheel arrangement for converting rotational driving force of the said clutch actuation motor into linear contact displacement force and a clutch actuation sensor for detecting the actuation of the clutch. The power transmission mechanism mounted inside a clutch cover is in contact with the clutch thereby leading to clutch engagement and disengagement.

Another object of the present invention is to provide an electrically operated clutch actuator for an automatic transmission system for automatically actuating a clutch before a gear shift operation, thereby removing the need for a clutch lever and thereby increase the operator's comfort by providing stress free and less toilsome ride.

The foregoing objectives and summary provide only a brief introduction to the present subject matter. To fully appreciate these and other objects of the present subject matter as well as the subject matter itself, all of which will become apparent to those skilled in the art, the ensuing detailed description of the invention and the claims should be read in conjunction with the accompanying drawings. However, it should be understood that the detailed description while indicating preferred embodiment(s) of the invention, is given by way of illustration only, since various changes and modifications within the scope of the invention will become apparent to those skilled in the art from this detailed description.

### BRIEF DESCRIPTION OF THE DRAWINGS

The above and other features, aspects, and advantages of the subject matter will be better understood with regard to the following description, appended claims and accompanying drawings where:
Figure 1 depicts an illustrative view of a clutch actuation system according to a first embodiment of the present invention.
Figure 2 shows a perspective view of the clutch actuation system assembly according to the first embodiment of the present invention.
Figure 3 shows a sectional view of the clutch actuation system assembled with an internal combustion engine according to the first embodiment of the present invention in a state where a clutch cover is partially sectioned.
Figure 4 shows a side view of an inner surface of the clutch cover comprising the first embodiment of the clutch actuation system according to the present invention.
Figure 5 shows a perspective sectional view of the clutch actuation system assembled with an internal combustion engine according to the first embodiment of the present invention in a state where a clutch cover is partially sectioned.
Figure 6 shows an exploded view of the first embodiment of the clutch actuation system assembly along with the clutch cover.
Figure 7 shows a sectional view of the clutch assembly with the clutch actuator system according to the first embodiment of the present invention.
Figure 8 depicts an illustrative view of a clutch actuation system according to a second embodiment of the present invention.

### DETAILED DESCRIPTION OF THE INVENTION

The subject matter described herein relates to an electrically operated automatic clutch actuator for an internal combustion engine for automatic disengagement and controlled re-engagement of a multi plate clutch assembly with the engine.

Various other features and embodiments of the clutch actuator according to the present invention here will be discernible from the following further description thereof, set out hereunder. In the ensuing exemplary embodiments, the engine is a four stroke single cylinder internal combustion engine. However it is contemplated that the disclosure in the present invention may be applied to any engine capable of accommodating the present subject matter without departing from the scope of the invention as defined by the appended claims. Further "front" and "rear", and "left" and "right" wherever referred to in the ensuing description refer to front and rear, and left and right directions as seen from the rear of the engine and looking forward. Furthermore, a "longitudinal" axis refers to a front to rear axis relative to the engine, while a "lateral" axis refers generally to a side to side, or left to right axis relative to the engine.

The present invention is now described in detail in connection with the rendered drawings. The detailed explanation of the constitution of parts other than the invention which constitutes an essential part has been omitted at suitable places.

Typically an internal combustion engine in a two wheeled vehicle includes a crankcase assembly divided into two crankcase halves, a crank chamber being defined and formed by the crankcase halves, a crankshaft housed in the crank chamber and a cylinder block connected to the crankcase. A clutch cover is arranged towards the right so that it is adjacent to the crankcase in the vehicle width direction. A counter shaft is arranged in the crankcase halves flanked by transmission cover, the rotation of the crankshaft being transmitted to the counter shaft. A drive shaft is arranged rearward or upward (to make the engine compact) of the counter shaft in the crankcase halves, the driving wheel being attached to the drive shaft through chain and sprocket means. The counter shaft is connected to the drive shaft through a multi-plate clutch and a gear box. The gears in the gear box are shifted by a gear shift actuator selecting the desired gear ratio to be given to the drive shaft by actuating the clutch by a clutch actuation system as desired in the present subject matter.

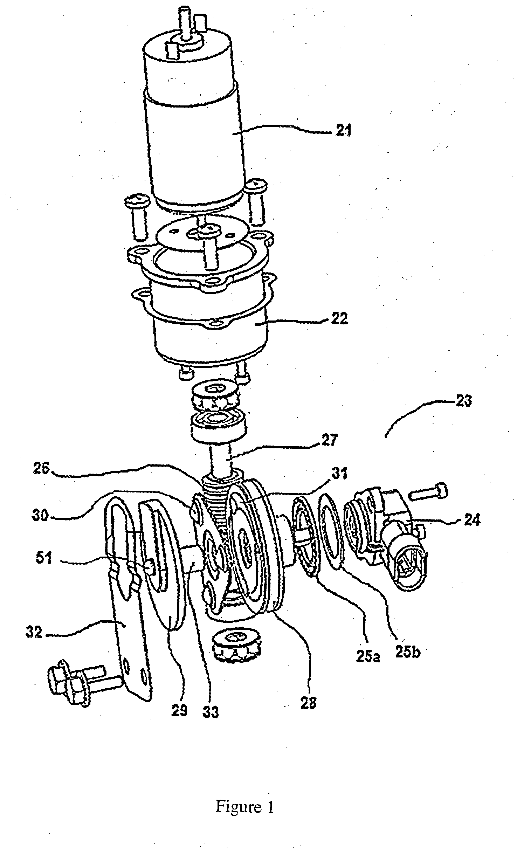

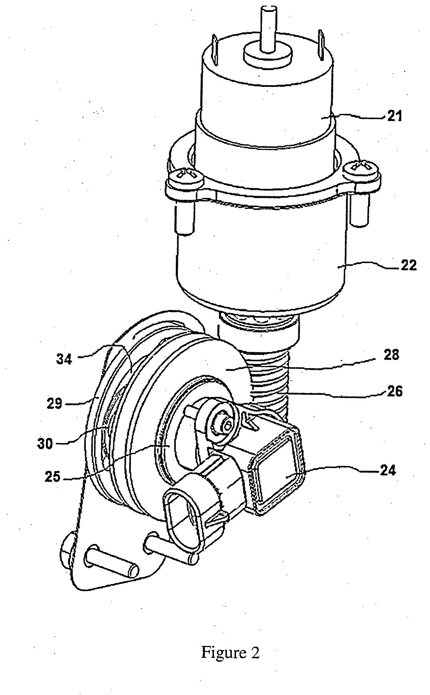

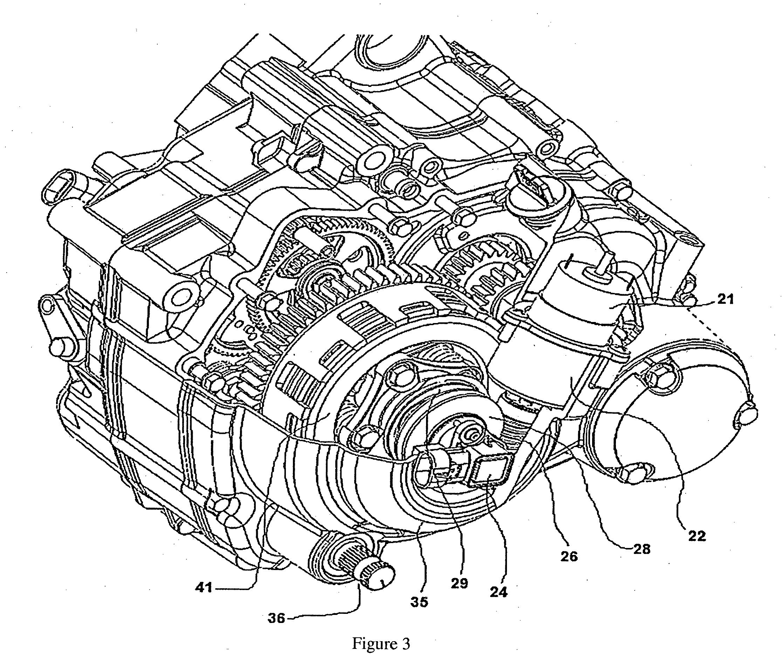

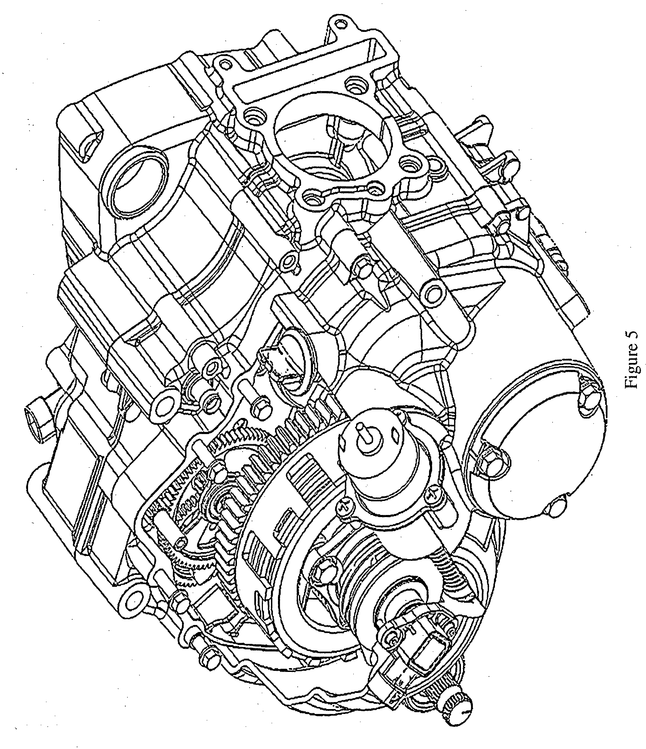

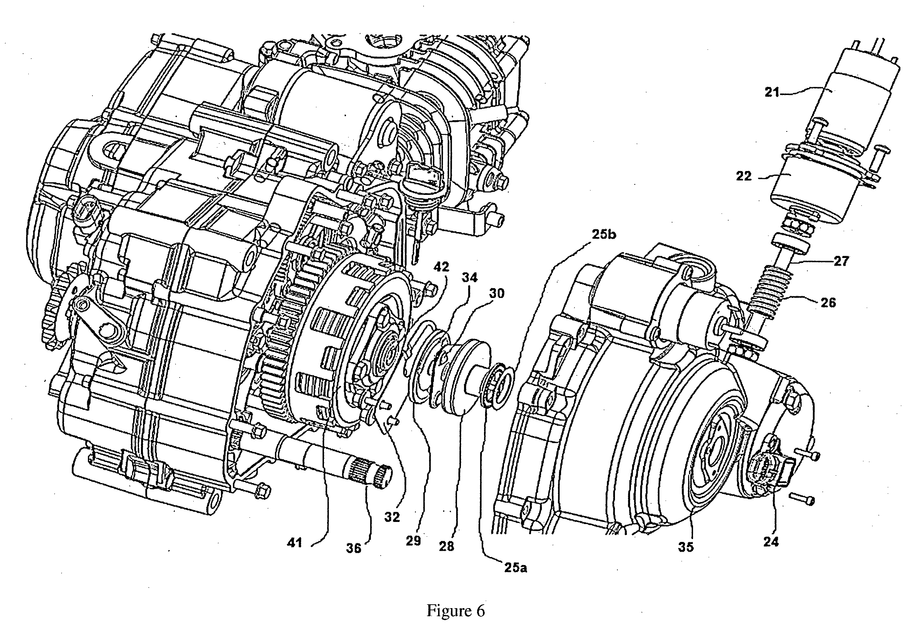

Figures 1-7 illustrate a first embodiment of the present invention wherein the clutch actuation system is positioned laterally to the engine towards the clutch side substantially inside a clutch cover **35**. The clutch cover **35** is adjacent to the crankcase (not shown) along the lateral axis of the engine. The clutch actuation system according to the present invention for actuating the operation of clutch engagement and disengagement includes a clutch actuation motor **21**, a reduction gear box **22** comprising of a plurality of reduction gears attached to the actuation motor **21**, a power transmission mechanism **23** which transmits the rotational driving force of the actuation motor **21**, a clutch actuation sensor **24** which detects the actuation of the clutch, a thrust bearing **25a** and a washer **25b**. The actuation motor **21** is mounted and secured to an external surface of the clutch cover **35** and sealed against ingress of oil. The actuation motor **21** is electrically connected to a controller (not shown) which may be programmed to control the direction of rotation of the actuation motor **21** as well as the time duration of its operation.

According to the first embodiment of the present invention, the power transmission mechanism **23** comprises of a worm wheel **28**, an actuator plunger **29** having a raised lug **51** and provided with an extended shaft **33**, a set of caged ramp balls **30** and a return spring **32**. The power transmission mechanism **23** transmits rotational driving force of the said motor **21** to a clutch release pin **42** through the worm wheel arrangement thereby engaging and disengaging the clutch **41** without any manual intervention.

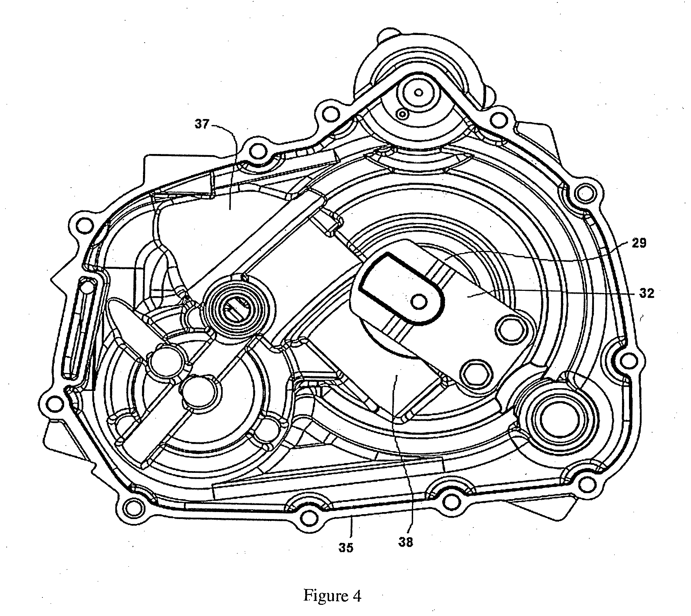

The reduction gear box **22** is connected to the said actuation motor **21** for reducing the power received from the said motor **21**. The reduction gear box **22** includes a worm gear **26** driven by a motor shaft **27** projecting out from the actuation motor **21** and the worm wheel **28** is mated with the worm gear **26**. The worm wheel **28** includes multiple segmented and ramped circumferential grooves **31** provided on one of its surfaces facing the return spring **32**. Each groove varies in depth along its length. The worm wheel **28** is coaxially held with the actuator plunger **29** wherein the actuator plunger **29** also has similar grooves **34** on one of its surfaces facing the worm wheel **28**. The worm gear **26** is supported interior to the clutch cover **35** in worm gear housing **38** as shown in Figure 4.

The return spring **32** is provided to substantially restrict the rotational movement of the actuator plunger **29**. It is secured to the inner surface of the clutch cover **35** and is constructed in such a way that it restricts the rotational movement of the actuator plunger **29** while allowing the linear movement of the raised lug **51** of the actuator plunger **29**.

Caged ramp balls **30** are positioned between the worm wheel **28** and the actuator plunger **29** and are supported on the extended shaft **33** originating from the actuator plunger **29**. When powered by the motor **21**, the caged ramp balls **30** rotate between the worm wheel grooves **31** and actuator plunger grooves **34** maintaining a constant distance between the two grooves surfaces resulting in a linear displacement for any angular displacement. Further the worm wheel **28**, actuator plunger **29**, raised lug **51** and the clutch release pin **42** are all co-axial.

The working of the clutch actuator system according to the first embodiment is now explained. The controller is programmed to drive the actuation motor **21** according to the riding conditions (e.g. engine r.p.m, throttle position etc.). The reduction gear box **22** reduces the output of the actuation motor **21** so as to optimally rotate the motor shaft **27**. The motor shaft **27** in turn rotates the worm gear **26** which subsequently rotates the worm wheel **28**. When the motor shaft **27** of the actuation motor **21** rotates through a desired number of complete revolutions, it results in a certain angular displacement in the worm wheel **28**. The resulting angular displacement can be classified into several quadrants. As the worm wheel **28** advances towards the actuator plunger **29**, the resultant force on the worm wheel drives the ball and ramp mechanism to convert the rotary movement into a linear displacement on the clutch **41** assembly. In a preferred embodiment, the worm wheel **28** rotates less than 90 degrees so as to avoid the caged balls from jumping out of the grooves. The actuator plunger **29** is rotationally held static in relation to the worm wheel **28** and the ramped circumferential grooves **31** present in worm wheel **28** as well those in actuator **34** are rotated relative to each other through the caged balls **30**. In other words the caged balls **30** running in the segmented and ramped circumferential grooves cause two opposite components to separate as the balls advance on the grooves as a result of any imposed angular displacement. The rotating balls traverse from high depth to low depth in the circumferential grooves. This is the mechanism that provides the conversion from rotary to linear displacement.

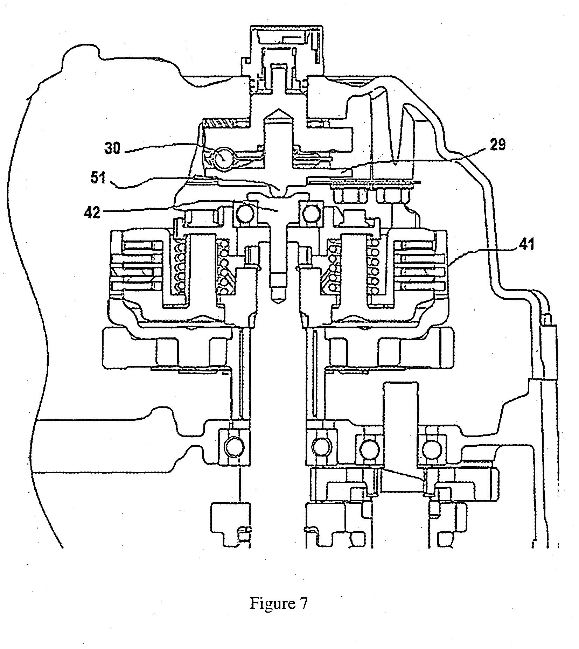

Figure 7 shows a sectional view of the first embodiment of the present invention. The raised lug **51** of the actuator plunger **29** protrudes from the return spring **32** and is just in contact with the clutch **41** through a clutch release pin **42**. Movement clockwise from this point will start to disengage the clutch by pressing the raised lug **51** onto the clutch release pin **42**. The rotation of the worm wheel **28** pushes the raised lug **51** towards the clutch release pin **42** which further presses the clutch spring and allows the clutch plates to slip thereby disengaging the clutch. The extent of angular movement (or quadrant) of the worm wheel **28** is detected by the clutch actuation sensor **24** and is fed into the controller which then signals the clutch engagement after gear shift operation. Consequently, the actuation motor **21** then rotates in opposite direction to release the pressure of the raised lug **51** on the clutch release pin **42** thereby engaging the clutch again. The said sensor **24** is supported just outside the clutch cover through an opening in it with the help of thrust bearing **25a** and a washer **25b**, both present inside the clutch cover **35**. The sensor **24** is connected to the controller.

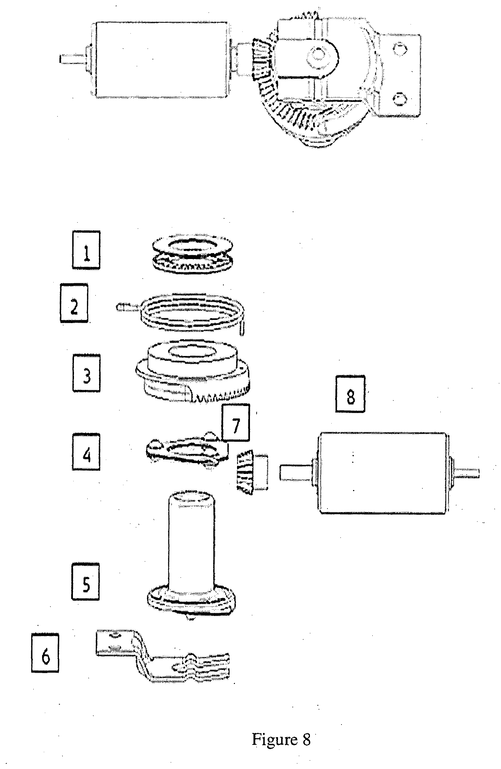

A second embodiment of the present invention is illustrated in Figure 8 which uses a crown wheel and a pinion gear for power transmission from actuation motor to raised lug of the actuator plunger. Here the reduction gear box includes pinion gear **7** driven by the motor shaft and the crown wheel **3** with a segmented ramp. The clutch actuator motor **8** rotates resulting in an angular displacement in crown wheel ramp **3**. The ramped features present in the crown wheel ramp and the actuator plunger **5** advance relative to each other. An additional component, a spring assisted torsion spring **2**, provides an opposing torque of half the peak torque required to disengage the clutch. The two opposed components (crown wheel and actuator plunger) separate as the balls **4** advance up in the ramp due to an imposed angular displacement. The return spring **6** retains the other components and ensures full release of actuator from the clutch.

In both the aforementioned embodiments, the actuation motor **21** and reduction gear box **22** are supported and secured on an external surface of the clutch cover **35** in motor housing **37** in a lateral direction. The said actuation motor may be supported on the clutch cover, either horizontally or vertically or through a predetermined angle. No major modifications are required in the usual crankcase and clutch cover designs.

Further, the actuation motor **21** used could be a 12V DC motor with around 1:32 gear ratio for the clutch actuation system. The motor shaft **27** is provided with bearings on both of its sides. Additionally, a fail-safe mechanism may be provided in case of any clutch actuator system malfunctions in addition to thermal stability provisions so that the system works equally well in cold and also in high temperature environment.

It will be appreciated that the present subject matter and its equivalent thereof offers many advantages, including those which have been described henceforth. The present invention improves operability of the vehicle by removing the need for a clutch lever thereby increasing the comfort and ease of the operator of the vehicle. Further the automatic transmission system comprising the clutch actuator can be accommodated in any engine, horizontal or vertical, and with any two wheeled vehicle containing such an engine. Preferably the present invention works best with a horizontal type engine. The invention fulfils the need for a simple electrically operated clutch actuator capable to be accommodated easily in the clutch cover. Furthermore, the present invention works best with an automatic gear shift actuator after disengagement and engagement of clutch.

The present invention is thus described. The foregoing description of the invention including the embodiments thereof has been presented for the purpose of illustration and description. It is not intended to be exhaustive nor is it intended to limit the invention to the precise form disclosed. It will be apparent to those skilled in the art that the disclosed embodiments may be modified in light of the above description. The embodiments described are chosen to provide an illustration of principles of the invention and its practical application to enable thereby one of ordinary skill in the art to utilize the invention in various embodiments and with various modifications as are suited to the particular use contemplated. Therefore the forgoing description is to be considered exemplary, rather than limiting, and the true scope of the invention is that described in the appended claims.

## Claims

1. An electrically operated clutch actuator system for a four stroke single cylinder internal combustion engine of a two-wheeled vehicle for actuating the operation of engagement and disengagement of a clutch (41) comprising:
a clutch cover (35) suitable to be disposed towards the right adjacent to a crankcase of said engine in vehicle width direction of said two-wheeled vehicle,
a clutch actuation motor (21) mounted to an external surface of said clutch cover (35) and sealed against ingress of oil,
a reduction gear box (22) connected to said actuation motor (21) for reducing the power received from said clutch actuation motor (21),
a power transmission mechanism (23) for converting the rotational driving force of said clutch actuation motor (21) into linear contact displacement force, and
a clutch actuation sensor (24) for detecting the actuation of the clutch (41);
**characterized in that**
said actuation motor (21) and said reduction gear box (22) are co-axially mounted and secured on said external surface of the clutch cover (35) in a motor housing (37) in a lateral direction, said power transmission mechanism (23) is mounted inside said clutch cover (35), and said clutch actuation sensor (24) is just outside the clutch cover (35).

2. The clutch actuator system as claimed in claim 1, wherein the said power transmission mechanism (23) comprises of a worm wheel (28), an actuator plunger (29) having a raised lug (51) and provided with an extended shaft (33), a set of caged ramp balls (30) and a return spring (32), said worm wheel (28) and said actuator plunger (29) having multiple circumferential grooves (31) on one of their surfaces facing each other in such a way that the set of caged ramp balls (30) is capable to rotate between said worm wheel (28) and said actuator plunger (29) through the circumferential grooves (31).

3. The clutch actuator system as claimed in claim 1, wherein said reduction gear box (22) comprises a worm gear (26) connecting the reduction gear box (22) to said worm wheel (28) of said power transmission mechanism (23).

4. The clutch actuation system as claimed in claim 2, wherein the said return spring (32) is secured to the inner surface of the clutch cover (35) so that the return spring (32) restricts the rotational movement of the said actuator plunger (29) and allows only the linear movement of said raised lug (51) of said actuator plunger (29).

5. The clutch actuator system as claimed in claim 3, wherein an entry for said worm gear (26)_and a motor shaft (27) is provided on the clutch cover (35).

6. The clutch actuator system as claimed in any of the preceding claims wherein said actuation motor (21) is supported on the clutch cover (35) either horizontally, or vertically, or through a predetermined angle.

7. An internal combustion engine of any type including a horizontal internal combustion engine comprising a clutch actuator system as claimed in any of the preceding claims.

## Patentansprüche

1. Elektrisch angetriebenes Kupplungsantriebssystem für einen Viertakt-Einzelzylinder-Verbrennungsmotor eines Zweiradfahrzeugs, zum Betätigen der Kuppel- und Auskuppelvorgänge einer Kupplung (41), aufweisend:
einen Kupplungsdeckel (35), der zur Anordnung nach rechts neben einem Kurbelgehäuse des Motors in Richtung der Fahrzeugbreite des Zweiradfahrzeugs geeignet ist,
einen Kupplungsbetätigungsmotor (21), der an einer Außenfläche des Kupplungsdeckels (35) angebracht ist und gegen das Eindringen von Öl abgedichtet ist,
einen Untersetzungsgetriebekasten (22), der mit besagtem Betätigungsmotor (21) zum Untersetzen der von dem Kupplungsbetätigungsmotor (21) erhaltenen Antriebsleistung verbunden ist,
einen Kraftübertragungsmechanismus (23) zum Umsetzen der Drehantriebskraft des Kupplungsbetätigungsmotors (21) in eine lineare Kontakt-Verschiebungskraft, und
einen Kupplungsbetätigungssensor (24) zum Detektieren der Betätigung der Kupplung (41),
**dadurch gekennzeichnet, dass**
der Betätigungsmotor (21) und der Untersetzungsgetriebekasten (22) in einer seitlichen Richtung koaxial montiert und auf der Außenfläche des Kupplungsdeckels (35) in einem Motorgehäuse (37) befestigt sind, wobei der Kraftübertragungsmechanismus (23) innerhalb des Kupplungsdeckels (35) angebracht ist und der Kupplungsbetätigungssensor (24) sich gerade außerhalb des Kupplungsdeckels (35) befindet.

2. Kupplungsantriebssystem nach Anspruch 1, wobei der Kraftübertragungsmechanismus (23) ein Schneckenrad (28), einen Antriebskolben (29), der eine vorspringende Nase (51) hat und mit einer verlängerten Welle (33) versehen ist, einen Satz eingefasster Auflaufkugeln (30) und eine Rückstellfeder (32) umfasst, wobei das Schneckenrad (28) und der Antriebskolben (29) mehrere umlaufende Nuten (31) auf einer ihrer einander zugewandten Oberflächen derart haben, dass der Satz eingefasster Auflaufkugeln (30) zwischen dem Schneckenrad (28) und dem Antriebskolben (29) durch die umlaufenden Nuten (31) drehbar ist.

3. Kupplungsantriebssystem nach Anspruch 1, wobei der Untersetzungsgetriebekasten (22) eine Schnecke (26) aufweist, die den Untersetzungsgetriebekasten (22) mit dem Schneckenrad (28) des Kraftübertragungsmechanismus (23) verbindet.

4. Kupplungsantriebssystem nach Anspruch 2, wobei die Rückstellfeder (32) an der Innenfläche des Kupplungsdeckels (35) befestigt ist, sodass die Rückstellfeder (32) die Drehbewegung des Antriebskolbens (29) einschränkt und lediglich die Linearbewegung der vorspringenden Nase (51) des Antriebskolbens (29) zulässt.

5. Kupplungsantriebssystem nach Anspruch 3, wobei ein Zugang für die Schnecke (26) und eine Motorwelle (27) auf dem Kupplungsdeckel (35) vorgesehen sind.

6. Kupplungsantriebssystem nach einem der vorhergehenden Ansprüche, wobei der Betätigungsmotor (21) auf dem Kupplungsdeckel (35) entweder horizontal oder vertikal oder gemäß einem vorbestimmten Winkel gehalten ist.

7. Verbrennungsmotor von jeglichem Typ, einschließlich eines liegenden Verbrennungsmotors, mit einem Kupplungsantriebssystem nach einem der vorhergehenden Ansprüche.

## Revendications

1. Système d'actionneur d'embrayage à actionnement électrique pour un moteur à combustion interne à cylindre unique et à quatre temps d'un véhicule à deux roues pour actionner l'opération d'engagement et de désengagement d'un embrayage (41) comprenant :
un couvercle d'embrayage (35) approprié pour être disposé vers la droite de manière adjacente à un carter dudit moteur dans une direction de largeur de véhicule dudit véhicule à deux roues,
un moteur d'actionnement d'embrayage (21) monté sur une surface externe dudit couvercle d'embrayage (35) et scellé de manière étanche vis-à-vis de l'entrée d'huile,
un réducteur (22) relié audit moteur d'actionnement (21) pour réduire la puissance reçue en provenance dudit moteur d'actionnement d'embrayage (21),
un mécanisme de transmission de puissance (23) pour convertir la force d'entraînement en rotation dudit moteur d'actionnement d'embrayage (21) en force de déplacement de contact linéaire, et
un capteur d'actionnement d'embrayage (24) pour détecter l'actionnement de l'embrayage (41) ;
**caractérisé par le fait que**
ledit moteur d'actionnement (21) et ledit réducteur (22) sont montés et fixés coaxialement sur ladite surface externe du couvercle d'embrayage (35) dans un carter de moteur (35) dans une direction latérale, ledit mécanisme de transmission de puissance (23) est monté à l'intérieur dudit couvercle d'embrayage (35), et ledit capteur d'actionnement d'embrayage (24) se trouve juste à l'extérieur du couvercle d'embrayage (35).

2. Système d'actionneur d'embrayage selon la revendication 1, dans lequel ledit mécanisme de transmission de puissance (23) comprend une roue à vis (28), un piston d'actionneur (29) ayant un tenon surélevé (51) et comportant un arbre étendu (33), un ensemble de billes de rampe en cage (30) et un ressort de rappel (32), ladite roue à vis (28) et ledit piston d'actionneur (29) ayant de multiples rainures circonférentielles (31) sur l'une de leurs surfaces se faisant mutuellement face d'une manière telle que l'ensemble de billes de rampe en cage (30) est capable de tourner entre ladite roue à vis (28) et ledit piston d'actionneur (29) à travers les rainures circonférentielles (31).

3. Système d'actionneur d'embrayage selon la revendication 1, dans lequel ledit réducteur (22) comprend une vis sans fin (26) reliant le réducteur (22) à ladite roue à vis (28) dudit mécanisme de transmission de puissance (23).

4. Système d'actionneur d'embrayage selon la revendication 2, dans lequel ledit ressort de rappel (32) est fixé à la surface interne du couvercle d'embrayage (35) de telle sorte que le ressort de rappel (32) limite le mouvement de rotation dudit piston d'actionneur (29) et permet uniquement le mouvement linéaire dudit tenon surélevé (51) dudit piston d'actionneur (29).

5. Système d'actionneur d'embrayage selon la revendication 3, dans lequel une entrée pour ladite vis sans fin (26) et un arbre de moteur (27) est prévue sur le couvercle d'embrayage (35).

6. Système d'actionneur d'embrayage selon l'une quelconque des revendications précédentes, dans lequel ledit moteur d'actionnement (21) est supporté sur le couvercle d'embrayage (35) horizontalement, verticalement ou sur un angle prédéterminé.

7. Moteur à combustion interne de n'importe quel type, inclu comprenant un moteur à combustion interne horizontal, comportant un système d'actionneur d'embrayage selon l'une quelconque des revendications précédentes.
